# EUROPEAN PATENT SPECIFICATION

(11) **EP 3 071 352 B1**
(45) Date of publication and mention of the grant of the patent: **27.12.2023**
(21) Application number: 14864037.8
(22) Date of filing: 17.11.2014
(51) Int. Cl.: B22F 3/105, C04B 35/571, C04B 35/589, B22F 5/10, B22F 10/28, B22F 10/32, B33Y 70/10, C22C 29/00, C22C 32/00

(54) **METHOD FOR FABRICATING A METAL-CERAMIC COMPOSITE ARTICLE**
VERFAHREN ZUR HERSTELLUNG EINES METALL-KERAMIK-VERBUNDARTIKELS
PROCÉDÉ DE FABRICATION D'UN ARTICLE COMPOSITE MÉTAL-CÉRAMIQUE

(30) Priority: 19.11.2013 US 201361905886 P
(43) Date of publication of application: 28.09.2016
(73) Proprietor: RTX Corporation, Farmington, CT 06032 (US)
(72) Inventor: SCHMIDT, Wayde R., Pomfret Center, CT 06259 (US)
(74) Representative: Dehns
(86) International application number: PCT/US2014/065862
(87) International publication number: WO 2015/077162

(56) References cited:
- EP-B2- 0 287 657
- JP-A- H0 497 938
- JP-A- H03 146 606
- US-A- 4 855 102
- US-A- 5 745 834
- US-A1- 2002 035 026
- KEVIN JAKUBENAS ET AL: "Silicon Carbide from Laser Pyrolysis of Polycarbosilane", JOURNAL OF THE AMERICAN CERAMIC SOCIETY., vol. 78, no. 8, 1 August 1995 (1995-08-01) , pages 2263-2266, XP055201359, US ISSN: 0002-7820, DOI: 10.1111/j.1151-2916.1995.tb08653.x
- ZHANG Y ET AL: "Characterization of laser powder deposited Ti-TiC composites and functional gradient materials", JOURNAL OF MATERIALS PROCESSING TECHNOLOGY, ELSEVIER, NL, vol. 206, no. 1-3, 12 September 2008 (2008-09-12), pages 438-444, XP022713586, ISSN: 0924-0136, DOI: 10.1016/J.JMATPROTEC.2007.12.055 [retrieved on 2007-12-26]
- KAMRAN AAMIR MUMTAZ ET AL: "Laser melting functionally graded composition of Waspaloy(R) and Zirconia powders", JOURNAL OF MATERIALS SCIENCE, KLUWER ACADEMIC PUBLISHERS, BO, vol. 42, no. 18, 3 June 2007 (2007-06-03), pages 7647-7656, XP019528803, ISSN: 1573-4803, DOI: 10.1007/S10853-007-1661-3

## Description

### CROSS-REFERENCE TO RELATED APPLICATION

This application claims priority to U.S. Provisional Application No. 61/905,886, filed November 19, 2013.

### BACKGROUND

Additive processing is known and used to form metallic or organic-based polymeric articles. In some situations, additive processing uses a directed energy beam to selectively sinter a powder to produce an article. The process can be conducted in a computer aided laser apparatus that sequentially sinters a plurality of powder layers to build the desired part in a layer-by-layer (additive) fashion.

J. Am Ceram. Soc, 1995, 78, 2263 discloses laser pyrolysis for extending solid free-form fabrication to polymeric precursors. US 2002/0035026 discloses a molded part of a ceramic material derived from polymers.

ZHANG Y ET AL: "Characterization of laser powder deposited Ti-TiC composites and functional gradient materials", JOURNAL OF MATERIALS PROCESSING TECHNOLOGY, ELSEVIER, NL, vol. 206, no. 1-3, 12 September 2008, pages 438-444 and KAMRAN AAMIR MUMTAZ ET AL: "Laser melting functionally graded composition of Waspaloy(R) and Zirconia powders", JOURNAL OF MATERIALS SCIENCE, KLUWER ACADEMIC PUBLISHERS, BO, vol. 42, no. 18, 3 June 2007, pages 7647-7656 disclose method of making metal-ceramic composites with a graded composition.

### SUMMARY

The invention is defined in the appended claims.

A metal-ceramic composite article outside the scope of the present invention includes a monolithic structure formed of a compositionally-controlled metal-ceramic composite material. The monolithic structure includes at least one internal passage and the monolithic structure has a graded composition with respect to the metal and the ceramic of the metal-ceramic composite material.

The metal-ceramic composite material includes at least one metal selected from the group consisting of silicon, aluminum, copper, nickel, iron, titanium, magnesium, cobalt, alloys thereof, and combinations thereof.

The metal-ceramic composite material a ceramic material selected from the group consisting of silicon-containing ceramic material, oxides of silicon, copper, aluminum, nickel, boron, titanium, zirconium, strontium and hafnium, and combinations thereof.

The silicon-containing ceramic material includes at least one of boron, carbon, oxygen, and nitrogen.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example method for fabricating a metal-ceramic composite article.
Figure 2 pictorially illustrates the method of Figure 1.

### DETAILED DESCRIPTION

There is a challenge in additively processing ceramic materials with metallic materials because the metal and the ceramic materials process under different conditions. For example, to densify a metal or a ceramic, different laser powers, temperatures, atmospheric compositions, pressures, soak times, etc. are required. Thus, if processed together, in a mixed powder for example, the resulting article will be incompletely densified and will be unsuitable for the end-use.

As will be discussed, the method 20 herein utilizes a powder material that includes an energy-beam responsive ceramic precursor (which hereafter may also be referred to simply as a "ceramic precursor"). The use of the ceramic precursor permits co-processing with a metal material to form a densified metal-ceramic composite article. The term "energy-beam responsive" refers to a ceramic precursor that responds to a given energy beam by chemically converting to a ceramic material or a ceramic material intermediate. In non-limiting embodiments, the energy beam can be a laser, an electron beam, a microwave beam or a directed plasma.

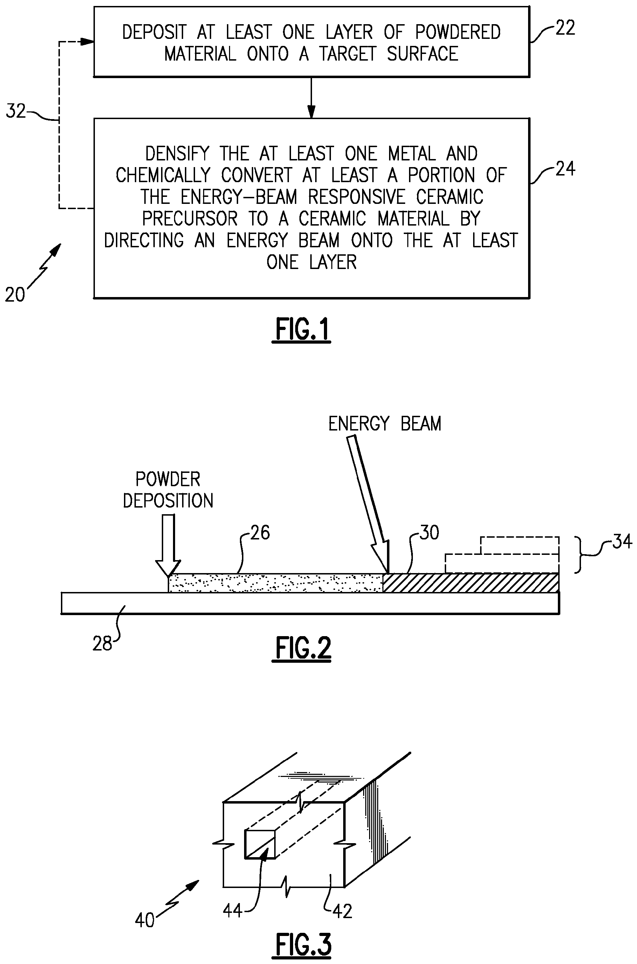

Figure 1 illustrates an example method 20 for additively fabricating a metal-ceramic composite article, and Figure 2 pictorially illustrates an example of the method 20. The method 20 includes a deposition step 22 and a densification step 24. The deposition step 22 includes depositing at least one layer 26 of a powdered material onto a target surface 28. The powdered material includes at least one metal and an energy-beam responsive ceramic precursor.

The deposition of the layer 26 can be conducted using one or more powder feed streams of the metal and the ceramic precursor. Alternatively, the deposition can involve the deposition of a powder bed that contains the metal and the ceramic precursor. A powdered material is a plurality of loose particles. The powdered material can include a mixture of exclusively metal particles and exclusively ceramic precursor particles, particles that contain metal and ceramic precursor, or a combination thereof. As can be appreciated, the deposition technique is not limited and other techniques can alternatively be used.

The densification step 24 includes densifying the metal and chemically converting at least a portion of the ceramic precursor to a ceramic material. The densification forms a densified layer 30 by directing an energy-beam onto the powdered material. Thus, the energy-beam causes the densification of the metal and the chemical conversion of the ceramic precursor. Densification of the metal and the chemical conversion of the ceramic precursor can occur immediately prior to, simultaneously with, or after the powdered material contacts the target surface 28 to create the at least one layer 26. Densification of the at least one layer 26 can densify the entire layer or any portion thereof. Additionally, the energy-beam can be controlled for continuous or intermittent interaction with the powder material. For example, the energy-beam can be continuous or intermittent/pulsed, and the time of exposure to the energy-beam, and/or the energy, can be varied in a continuous or discontinuous manner.

The deposition step 22 and the densification step 24 is repeated for a desired number of repetitions, as represented at 32 in Figure 1, to additively build the article layer-by-layer. In this regard, the energy-beam can be directed onto the successive deposited layers according to particular cross-sections of the article being. In this case, the target surface onto which the powdered material is deposited can initially be a substrate or bed of the apparatus or, for repetition layers, can be a previously deposited and densified layer.

In one example additive process, the powdered material is fed to a machine, which may provide a vacuum or controlled atmosphere, for example. The machine deposits multiple layers of the powdered material onto one another. The layers are selectively joined to one another, using the energy beam, with reference to Computer-Aided Design data to form 3-dimensional solid structures that relate to a particular cross-section of the article being formed. Other layers or portions of layers corresponding to negative features, such as internal passage 44 described below, are not densified or joined and thus remain as a powdered material. The unjoined powder material may later be removed using blown air or mechanical vibration, for example. With the layers built upon one another and joined to one another cross-section by cross-section, an article or portion thereof, such as for a repair, can be produced.

In further examples, the powdered material includes a greater amount of the metal than an amount of the ceramic precursor. For instance, if repetitions of the steps 22/24 are used to additively build the article, the layers that are deposited and densified can be the same or different with regard to the amounts of the metal and ceramic precursor. For example, the amount of ceramic precursor, and thus the amount of ceramic material produced in the densified layer, can be fixed over successive deposited layers such that the final article has a relatively uniform distribution of the ceramic material through the metal.

The amount of ceramic precursor and metal is changed such that the final article has a non-uniform distribution of ceramic material as the layers are additively built. A ratio of an amount of the metal to an amount of the energy ceramic precursor is changed for desired ones of the deposited layers such that at least a portion of the article has a graded composition. A graded composition is a composition that gradually or incrementally changes as a function of distance from a reference point or surface. In this regard, the article could include a low amount of ceramic material or even no ceramic material at a first surface and a relatively higher amount of the ceramic material at an opposed second surface with a gradual, incremental, or otherwise mathematically described increase in the amount of ceramic material from the first surface to the second surface.

The densification step 24 of the method 20 can be conducted in an inert environment or in a reactive environment with regard to reactivity with the ceramic precursor. For example, the densification step 24 can be conducted in a controlled environment that is fully or substantially fully inert gas, such as argon or helium. In this example, the inert gas is substantially unreactive with the ceramic precursor. Alternatively, the densification step 24 can be conducted in a controlled environment that includes a non-impurity amount of a gas that is reactive with the ceramic precursor. For example, the reactive gas can include hydrogen, ammonia, or combinations thereof, in an amount of 5-80%, that react with the ceramic precursor or ceramic intermediate from the ceramic precursor upon application of and interaction with the energy-beam.

In a further example, the ceramic precursor and the metal are selected according to their mutual compatibility with regard to the selected energy-beam used in the densification step 24. For example, for a given energy-beam, with respect to predefined energy-beam parameters such as beam power, wavelength, beam width, scan rate, etc., a ceramic precursor that is responsive to the energy beam is selected such that upon exposure to the energy beam, the ceramic precursor at least partially converts to ceramic material. Similarly, the metal is selected such that upon exposure to the energy-beam, the metal densifies. The densification of the metal can be by melt fusion, phase transition or sintering (solid state diffusion) or a combination of these. Thus, the ceramic precursor and metal are selected to both be responsive to the given energy beam.

In further examples, the metal is selected from silicon, aluminum, copper, nickel, steel, titanium, magnesium, cobalt, alloys and combinations thereof. The ceramic precursor is selected from organometallic compounds or complexes, metal organics, sol-gel precursors, and combinations thereof. In further examples of organometallics, the organometallic material can be acetylacetonate, octanoate, oxalate, stearate, hydroxide or alkoxide, such as nickel acetylacetonate, nickel octanoate, nickel oxalate, nickel stearate, copper hydroxide, silicon alkoxide, alkyl aluminum, alkyl boron, and borane adducts. In further examples of sol-gel precursors, the sol-gel precursors can be selected from organoalkoxysilanes, titanium-, zirconium-, strontium- and hafnium-alkoxy compounds.

The metal and the ceramic precursor can be selected to be non-reactive with each other or reactive with each other during the densification step 24. If non-reactive, the metal persists in metallic form after the densification step 24. If reactive, the metal, or at least a portion of the metal, reacts with the ceramic precursor (or ceramic intermediate from the ceramic precursor) to form a ceramic material. For example, if the selected metal includes silicon (considered a metal for purposes of this disclosure), the silicon can react with excess carbon from the decomposition of the ceramic precursor to form silicon carbide in the final article. Similarly, aluminum, copper, nickel, titanium, magnesium, cobalt and components of steel or alloys may be used to selectively react with elements of the ceramic precursor to produce ceramic phases in the final article.

Figure 3 illustrates a representative portion of an example metal-ceramic composite article 40 that can be fabricated using the method 20. In this example, the article 40 includes a monolithic structure 42 formed of a compositionally-controlled metal-ceramic composite material, as described herein. The monolithic structure 42 includes an internal passage 44, although additional internal passages could be provided and the geometry of the internal passage can be varied according to design requirements. The internal passage 44 can be a cavity, a void, or a channel, for example, and can be used to provide internal fluid flow or cooling in the article 40. The internal passage 44 can be formed during the method 20 by selectively not densifying portions of the powder material layers in the additive process. The powdered material thus remains as a loose powder that can later be removed to provide the internal passage 44. In this regard, the internal passage can be surface connected to an exterior surface of the article 40 for the removal of the loose powder.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures.

## Claims

1. A method for fabricating a metal-ceramic composite article, the method comprising:
(a) depositing at least one layer of a powdered material onto a target surface, the powdered material including at least one metal and an energy-beam responsive ceramic precursor; and
(b) densifying the at least one metal and chemically converting at least a portion of the energy-beam responsive ceramic precursor to a ceramic material to form a densified layer by directing an energy beam onto the powdered material,
wherein the method further includes:
(i) repeating said steps (a) and (b) according to additional cross-sections of the article to additively build the article, and
(ii) changing a ratio of an amount of the at least one metal to an amount of the energy-beam responsive ceramic precursor such that at least a portion of the article has a graded composition; and
wherein the energy-beam responsive ceramic precursor is selected from the group consisting of an organometallic compound or complex, metal organics, a sol-gel precursor, and combinations thereof.

2. The method as recited in claim 1, including directing the energy beam onto the at least one layer according to a particular cross-section of an article being formed.

3. The method as recited in any preceding claim, wherein said step (b) is conducted in a controlled environment including a non-impurity amount of a gas that is reactive with the energy-beam responsive ceramic precursor, preferably wherein said gas is selected from the group consisting of hydrogen, ammonia and combinations thereof.

4. The method as recited in any preceding claim, wherein the at least one metal is selected from the group consisting of silicon, aluminum, copper, nickel, iron, titanium, magnesium, cobalt, alloys thereof, and combinations thereof.

5. The method as recited in any preceding claim, wherein the powdered material includes a greater amount of the at least one metal than an amount of the energy-beam responsive ceramic precursor.

6. The method as recited in any preceding claim, wherein the at least one metal is non-reactive with the energy-beam responsive ceramic precursor in said step (b).

7. The method as recited in any one of claims 1-5, wherein the at least one metal reacts with the energy-beam responsive ceramic precursor in said step (b) to form a ceramic material.

8. The method as recited in any preceding claim, wherein the energy-beam responsive ceramic precursor is a silicon-containing material.

## Patentansprüche

1. Verfahren zur Herstellung eines Metall-Keramik-Verbundartikels, wobei das Verfahren Folgendes umfasst:
(a) Abscheiden mindestens einer Schicht eines pulverförmigen Materials auf einer Zieloberfläche, wobei das pulverförmige Material mindestens ein Metall und einen auf Energiestrahlen reagierenden Keramikvorläufer beinhaltet; und
(b) Verdichten des mindestens einen Metalls und chemisches Umwandeln mindestens eines Abschnitts des auf Energiestrahlen reagierenden Keramikvorläufers in ein Keramikmaterial, um eine verdichtete Schicht zu bilden, indem ein Energiestrahl auf das pulverförmige Material gerichtet wird,
wobei das Verfahren ferner Folgendes beinhaltet:
(i) Wiederholen der Schritte (a) und (b) entsprechend zusätzlichen Querschnitten des Artikels, um den Artikel additiv zu bauen, und
(ii) Ändern eines Verhältnisses einer Menge des mindestens einen Metalls zu einer Menge des auf Energiestrahlen reagierenden Keramikvorläufers, so dass mindestens ein Abschnitt des Artikels eine abgestufte Zusammensetzung aufweist; und
wobei der auf Energiestrahlen reagierende Keramikvorläufer aus der Gruppe, die aus einer metallorganischen Verbindung oder einem metallorganischen Komplex, metallorganischen Stoffen, einem Sol-Gel-Vorläufer und Kombinationen davon besteht, ausgewählt wird.

2. Verfahren nach Anspruch 1, das Richten des Energiestrahls auf die mindestens eine Schicht entsprechend einem bestimmten Querschnitt eines zu bildenden Artikels beinhaltet.

3. Verfahren nach einem der vorhergehenden Ansprüche, wobei der Schritt (b) in einer kontrollierten Umgebung durchgeführt wird, die eine verunreinigungsfreie Menge eines Gases, das mit dem auf Energiestrahlen reagierenden Keramikvorläufer reagiert, beinhaltet, wobei vorzugsweise das Gas aus der Gruppe, die aus Wasserstoff, Ammoniak und Kombinationen davon besteht, ausgewählt wird.

4. Verfahren nach einem der vorhergehenden Ansprüche, wobei das mindestens eine Metall aus der Gruppe, die aus Silizium, Aluminium, Kupfer, Nickel, Eisen, Titan, Magnesium, Kobalt, Legierungen davon und Kombinationen davon besteht, ausgewählt wird.

5. Verfahren nach einem der vorhergehenden Ansprüche, wobei das pulverförmige Material eine größere Menge des mindestens einen Metalls als eine Menge des auf Energiestrahlen reagierenden Keramikvorläufers beinhaltet.

6. Verfahren nach einem der vorhergehenden Ansprüche, wobei das mindestens eine Metall in dem Schritt (b) nicht mit dem auf Energiestrahlen reagierenden Keramikvorläufer reagiert.

7. Verfahren nach einem der Ansprüche 1-5, wobei das mindestens eine Metall in dem Schritt (b) mit dem auf Energiestrahlen reagierenden Keramikvorläufer reagiert, um ein Keramikmaterial zu bilden.

8. Verfahren nach einem der vorhergehenden Ansprüche, wobei der auf Energiestrahlen reagierende Keramikvorläufer ein siliziumhaltiges Material ist.

## Revendications

1. Procédé de fabrication d'un article composite métalcéramique, le procédé comprenant :
(a) le dépôt d'au moins une couche d'un matériau en poudre sur une surface cible, le matériau en poudre comportant au moins un métal et un précurseur céramique sensible à un faisceau d'énergie ; et
(b) la densification de l'au moins un métal et la conversion chimique d'au moins une partie du précurseur céramique sensible à un faisceau d'énergie en un matériau céramique pour former une couche densifiée en dirigeant un faisceau d'énergie sur le matériau en poudre,
dans lequel le procédé comporte en outre :
(i) la répétition desdites étapes (a) et (b) selon des sections transversales supplémentaires de l'article pour construire de manière additive l'article, et
(ii) la modification du rapport d'une quantité de l'au moins un métal sur une quantité du précurseur céramique sensible à un faisceau d'énergie de sorte qu'au moins une partie de l'article a une composition graduée ; et
dans lequel le précurseur céramique sensible à un faisceau d'énergie est choisi dans le groupe constitué d'un composé ou complexe organométallique, de composés organiques métalliques, d'un précurseur sol-gel et de combinaisons de ceux-ci.

2. Procédé selon la revendication 1, comportant la direction du faisceau d'énergie sur l'au moins une couche selon une section transversale particulière d'un article en cours de formation.

3. Procédé selon une quelconque revendication précédente, dans lequel ladite étape (b) est conduite dans un environnement commandé comportant une quantité sans impureté d'un gaz qui est réactif avec le précurseur céramique sensible à un faisceau d'énergie, de préférence dans lequel ledit gaz est sélectionné dans le groupe constitué de l'hydrogène, de l'ammoniac et des combinaisons de ceux-ci.

4. Procédé selon une quelconque revendication précédente, dans lequel l'au moins un métal est choisi dans le groupe constitué du silicium, de l'aluminium, du cuivre, du nickel, du fer, du titane, du magnésium, du cobalt, des alliages de ceux-ci et des combinaisons de ceux-ci.

5. Procédé selon une quelconque revendication précédente, dans lequel le matériau en poudre comporte une plus grande quantité de l'au moins un métal qu'une quantité du précurseur céramique sensible à un faisceau d'énergie.

6. Procédé selon une quelconque revendication précédente, dans lequel l'au moins un métal n'est pas réactif avec le précurseur céramique sensible à un faisceau d'énergie dans ladite étape (b) .

7. Procédé selon l'une quelconque des revendications 1 à 5, dans lequel l'au moins un métal réagit avec le précurseur céramique sensible à un faisceau d'énergie dans ladite étape (b) pour former un matériau céramique.

8. Procédé selon une quelconque revendication précédente, dans lequel le précurseur céramique sensible à un faisceau d'énergie est un matériau contenant du silicium.
